# EUROPEAN PATENT APPLICATION

(11) **EP 2 340 913 A1**
(43) Date of publication of application: **06.07.2011**
(21) Application number: 10425389.3
(22) Date of filing: 23.12.2010
(51) Int. Cl.: B23P 6/00, B21B 28/02, B21B 27/03

(54) **Production system for reconditioning used lamination cylinders**

(30) Priority: 30.12.2009 IT MN20090028
(71) Applicant: Gorlani, Fabio, 25100 Brescia (IT)
(72) Inventor: Gorlani, Fabio, 25100 Brescia (IT)
(74) Representative: Petazzi, Guido

(57) **Abstract**

The present invention relates to a production system for reconditioning used lamination cylinders (1) constituted of a shaft (2) and an external liner (3) of the type comprising a plurality of phases, including reconditioning a used cylinder and turning carried out on the shaft's core to remove the remaining wear-resistant material so that it becomes the core of a shaft of a new cylinder. The system envisages the realisation of a centrifuged tube made of anti-wear material, which is subjected to heat treatment to improve its wear resistance so that it becomes an external liner. Moreover, the tube is subjected to a mechanical process wherein both the internal and external surfaces are turned, followed by degreasing operation involving the internal surface of the tube and the external surface of the core and the removal of all the oily processing residues. At this point, the system envisages the application of a thin layer of special adhesive to the external surface of the core of the shaft and to the internal surface of the centrifuged tube, followed by keying whereby the core is inserted into the tube which becomes the external liner.
The production system ends with a few hours of rest to allow the mechanical adhesion properties to be reached. Finally, the system also provides for a separation phase in which the core is separated from the liner when worn, in order to be coupled with a new liner so as to obtain a new lamination cylinder.

## Description

The present invention relates to a production system for reconditioning used lamination cylinders, particularly suitable for re-using lamination cylinders at the end of their working life without having to discard and recast them.

As is known, in laminating mills, the laminating cylinder, also called the roll, is a fundamental component of the train of rolls, which can affect the economic viability and competitiveness of the production process. The choice of material of which the cylinder is composed therefore requires a careful evaluation of all the components as they affect the lamination. In particular, it is necessary to distinguish the external surface of the cylinder, also called the rolling surface (the zone where the plastic deformation of the laminated material takes place), whose main characteristics are resistance to wear, compression and cracks forming, from the core or shaft of the cylinder, which performs the function of transmitting motion, thus the mechanical properties thereof are of prime importance, in particular tensile strength and toughness. The cylinders currently utilised are constituted, in the majority of cases, of cast iron or steel.

The cast iron cylinders are carbon-iron alloy castings in which the external surface must feature notable hardness and wear resistance, while the core of the cylinder must feature very high strength and toughness.

These different properties can be obtained with different casting processes, which have in common, though, the characteristic of being constituted of a casting divided into two stages and formed of two irons with different chemical compositions.

Summing up, the mould is initially filled with the material which constitutes the wear coating and once the surface solidification has taken place, reaching the desired thickness, the material which constitutes the core is cast.

The result is a compact casting with a zone resistant to wear on the external surface (first material cast), a transition zone (with intermediate characteristics) and a zone inside the core itself (second material cast).

The cylinder thus obtained undergoes a first mechanical work process called riser removal during which the risers and casting systems are removed, then blasting is performed, to conduct an initial cleaning of the casting, followed by a heat treatment which depends on the characteristics desired.

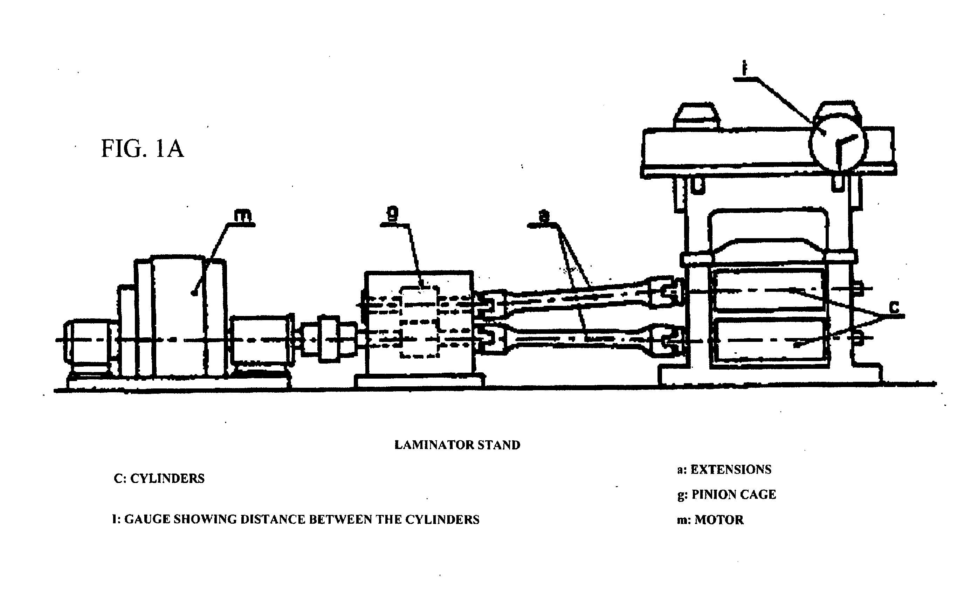

The casting is then sent to the machining department, where turning and milling work is carried out which allows couplings to be obtained on the core that are necessary for the connection between the cylinder and the laminating cage (shown in its entirety in figure 1A) and machining is performed in the workshop.

At this point, the cylinder is sent to the laminating mill where, in some cases, a profile is made on the rolling surface in the shape of the laminate to be obtained, for example, for the production of bar or wire rod, channels of the required size are made.

The lamination process brings with it progressive wear of the cylinder and when, for example, the tolerances envisaged for the laminate are exceeded, the channel becomes oval, or the rolling surface wears unevenly, the cylinder is removed from the cage and sent for new machining, wherein part of the wear-resistant material is removed by turning to restore the correct profile.

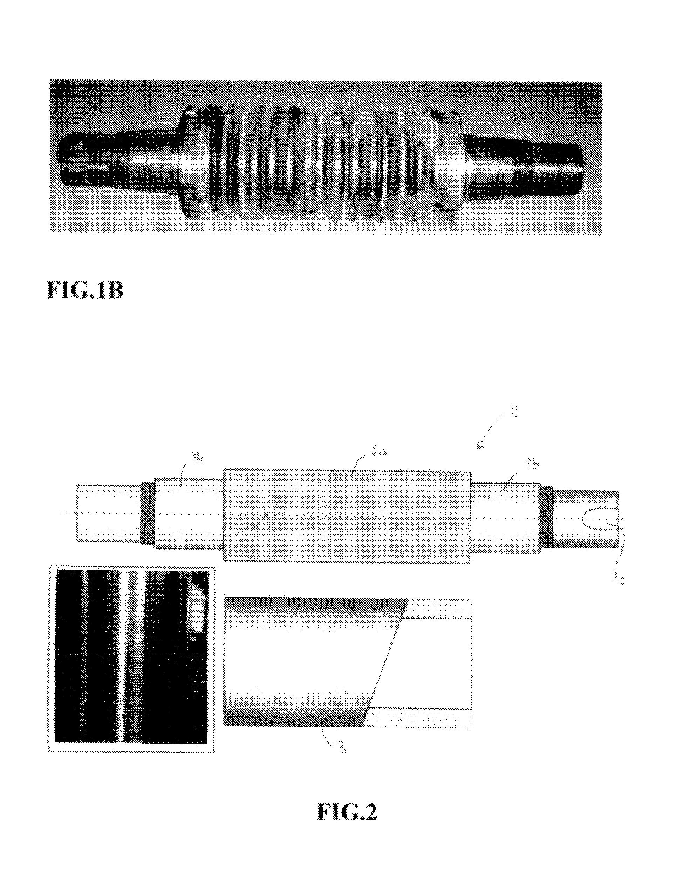

This can be done only a limited number of times since, every shape restoration turning phase involves the removal of wear-resistant material and goes on until the transition zone is reached, where the wear-resistant cast iron stops and the different material constituting the core starts. In these conditions the cylinder reaches the end of its life and is then discarded and sent back to the foundry to be recast and it usually amounts to 80%-85% of the starting cylinder. Figure 1B shows the state of a cylinder at the end of its life.

The construction of cylinders with the currently used technique involves several drawbacks.

The fundamental problem derives from the need to completely recast discarded cylinders. This operation is particularly onerous because of the cost of electricity, materials, and personnel that the foundry has to sustain.

A second problem concerns the additional cost to be met for the mechanical milling and turning work carried out on the core of the cylinder in order to bring the rough casting to the state of finished cylinder, ready to be mounted on the cage and become operational. A final problem arises during the recasting of the discarded cylinders.

In fact, during this operation a casting is obtained with intermediary chemical characteristics between the material constituting the core and that constituting the remaining coating, rendering the use of virgin material indispensable in order to correct the chemical analysis. In consequence of all this, it is necessary to carry out many production cycles before the material from the recast cylinders can be completely reused.

The aim of the present invention is essentially to resolve the problems of the commonly known technique, overcoming the drawbacks by means of a production system for reconditioning used laminating cylinders, which allows only about 20-30% of the weight of the cylinder to be recast.

A second aim of the present invention is to realise a production system for reconditioning used lamination cylinders, which allows the cylinder core to always be recycled.

A further aim of the present invention is to realise a production system for reconditioning used lamination cylinders, which can offer a product with better characteristics with respect to a cylinder cast by gravity.

A still further aim of the present invention is to realise a production system for reconditioning used lamination cylinders which, by means of an adhesive, allows the keying between the liner and the core to be rendered more secure.

A still further aim of the present invention is to realise a production system for reconditioning used lamination cylinders, which allows many of the environmental problems related to the entire lifecycle of the object to be reduced, i.e.: the production stage to have a reduction in processes and thus savings in energy consumption, labour, and materials; extended durability and higher resistance to wear to be guaranteed during the phases of the object's useful life, and almost total recyclability to be guaranteed, without any loss of the characteristics of the raw material, during the decommissioning phase at the end of its useful life.

A further but not final aim of the present invention is to realise a production system for reconditioning used lamination cylinders, which is easy to use and to manufacture and works well.

These aims and others besides, which will better emerge over the course of the present description, are essentially achieved by means of a production system for reconditioning used lamination cylinders, as outlined in the claims below.

Further characteristics and advantages will better emerge in the detailed description of a production system for reconditioning used lamination cylinders according to this invention, provided in the form of a non-limiting example, with reference to the accompanying drawings, in which:
- Figure 1A shows, schematically, a laminating line;
- Figure 1B shows a picture of a cylinder at the end of its life;
- Figure 2 shows, schematically, the components of a cylinder;
- Figure 3 shows a picture of a first component of the cylinder after a first treatment with the production system according to the present invention;
- Figure 4 shows a picture of a second component of the cylinder after a first treatment with the system in question;
- Figure 5 shows another work phase on the first component in Figure 3 according to the present system;
- Figure 6 shows a further picture of the second component in Figure 4 during the processing of the production system;
- Figure 7 shows the two components coupled together;
- Figure 8 shows a cylinder obtained with the system in question.

For greater clarity and as shown in Figure 2, a cylinder 1 is essentially composed of a shaft 2 and an outer liner 3 which covers part of the shaft with wear-resistant material.

In particular, the shaft is realised with cast iron or special steel and comprises a core 2a and a neck 2b located at each end of the said core. On each neck, hooks 2c are envisaged for the transmission of the motion in the laminating cage.

The production system for reconditioning used lamination cylinders envisages the use of a discarded cylinder, for example, as shown in Figure 1B, which is not recast, as happened with the commonly known technique, but undergoes a series of processing stages.

In fact, the production system in question envisages that, after reconditioning, the discarded cylinder undergoes a turning operation in which the wear-resistant material residues present are removed. The turning is performed on the core with suitable cutting and feeding parameters, in order to prepare the surface until it reaches a suitable diameter, as studied, to become the core of a new cylinder shaft.

At the same time, in the foundry, a centrifuged tube made of anti-wear material is realised, which is subjected to heat treatment and mechanical processing so that it becomes an external liner. Specifically, the centrifuged tube is made with a centrifugation process by means of which the liquid (molten iron or steel) is poured into a mould rotating at such a speed as to produce a casting (tube) which is free of defects and has better mechanical properties than a casting obtained by gravity casting.

The tube obtained, in fact, has a very compact structure, with no porosity, micro-shrinkage, gas bubbles or foreign bodies.

This is because all the heterogeneous materials with a density lower than the molten material (iron or steel) are projected into the pellicular layer in the internal surface.

The tube is then subjected to a heat treatment designed to increase the hardness characteristics of the material and, consequently, the wear resistance, followed by mechanical turning work on both the internal and external surfaces.

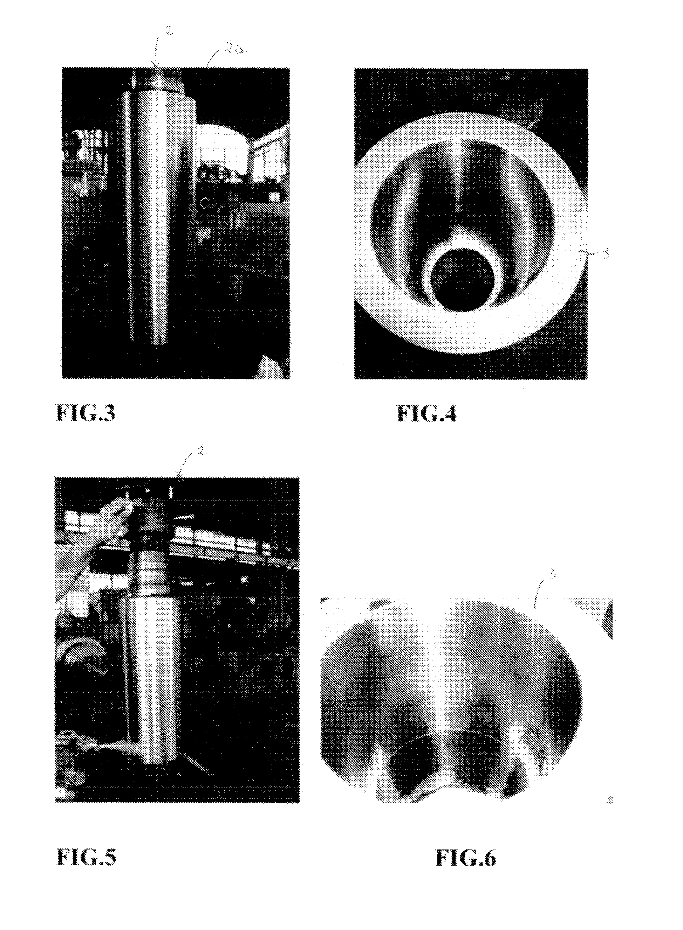

In this regard, it is important to realise the turning on the internal surface very carefully as it is essential that the internal diameter dimension obtained features a tolerance which allows clearance of 0.10 to 0.20 mm when coupled with the roughened off core of the shaft, as shown in Figure 3.

The system according to the present invention envisages, at this point, a cleaning and degreasing of the internal surface of the tube and the external surface of the previously turned core, so as to remove any oily processing residues.

Once the previous operation is complete, a thin layer of special adhesive is applied to the external surface of the core of the shaft, as shown in Figure 5 and to the internal surface of the centrifuged tube, as shown in Figure 6.

In more detail, the degreasing phase allows the surfaces to be prepared for the adhesive to grip and adhere to in a uniform and homogeneous manner.

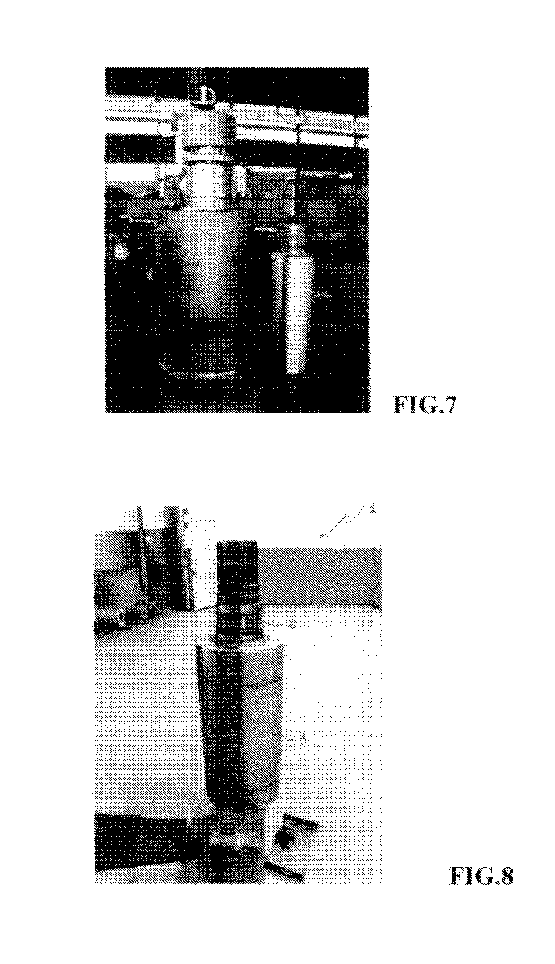

At this point, and as shown in Figure 7, the system includes a keying phase in which the pipe is inserted into the core.

It is an operation that proves simplified by the presence of clearance between the external surface of the core and the internal surface of the tube.

In particular, the system envisages that the keying phase is not carried out with heat because the materials employed are very hard and also very fragile and the internal tensions generated by shrinking-on, together with the tensions generated in the laminating process, could lead to the rupture of the external liner, with consequent danger for people and equipment.

The system in question envisages, finally, a resting phase for a period of several hours, depending also on ambient temperature, to allow the mechanical adhesion properties to be reached.

After the resting phase, the cylinder is ready to be sent to the laminating mill for use.

After use, namely, when the external surface of the laminating cylinder is completely worn out, i.e. at the end of its life, the user returns it to the foundry to be reworked and reprepared.

At this point, the internal core will be separated from the external liner.

This result is obtained by heating the external liner, which expands due to the temperature, and the dual goal of increasing the clearance and making the adhesive lose its effectiveness is obtained.

Once the core and the external liner have been separated, the core is cleaned, prepared and relined, so that it starts off with a new, previously prepared, external liner.

Thus the present invention achieves the aims set.

In fact, the production system for reconditioning used lamination cylinders in question allows the cylinder core to always be recycled, thereby obtaining savings in the machining of the milled and turned terminals. In addition, only 20-30% of the weight of the cylinder is melted as the core is preserved and reused unlike in the commonly known technique, where the whole cylinder is melted.

Advantageously, a cylinder made from the production system according to the present invention features superior wear durability characteristics as the centrifuged tube located externally has better characteristics with respect to a gravity-cast item.

In particular, production costs are much lower than those of the commonly known technique as a whole series of processes is avoided for the realisation of the shaft (which is the most complex part of the lamination cylinder since it features hooks for engagement with the cage), as it is always reused.

Moreover, with the cylinder obtained with this system, high mechanical wear resistance properties and high quality standards have been found, and thus the cylinder offers a better technological response for the realisation of mechanical components.

Advantageously, the coupling of the core to the liner by means of adhesive allows mechanical stress and internal tensions due to the shrink-on process to be avoided. These tensions may reach destructive levels and lead to rupture of the liner if they exceed the material's breaking load.

A further advantage found derives from the fact that the coupling between the core and the liner is easy to carry out, therefore it can also be done by the user, resulting in savings in stock management, since only the spare liners are stocked and the shafts are essentially those used.

In particular, transport costs from the foundry to the laminating mill are also contained and reduced as only liners are handled, which constitute 20-30% of the final weight of the cylinder.

As already mentioned earlier, the production system in question allows many of the environmental problems related to the entire lifecycle of the object to be reduced, since there is a reduction in processes in the production phase and thus savings in energy consumption; during the phases of the object's useful life, there is extended durability and higher resistance to wear, and during the decommissioning phase at the end of its useful life, almost total recyclability is guaranteed, without any loss of the characteristics of the raw material.

A further but not final advantage of the present invention is that it proves remarkably practical to use, simple to manufacture, and works well.

Naturally, further modifications or variants may be applied to the present invention while remaining within the scope of the invention that characterises it.

## Claims

1. A production system for reconditioning lamination used cylinders comprising stages of:
- reconditioning a used cylinder,
- turning designed to remove residual antiwear material and executed on the shaft core utilising cutting and advance parameters such as to prepare a surface to a diameter suitable to become a shaft core of a new cylinder,
- realization of a centrifuged tubular element of antiwear material made of a suitable alloy subjected to heat treatment to improve wear resistance for utilisation as an external liner,
- mechanical turning of the tubular element both externally and internally,
- degreasing of the internal surface of the tubular element and of the external surface of the core and removal of all oily processing residues,
- application of a film of special adhesive onto the external surface of the shaft core and onto the internal surface of the centrifuged tubular element,
- keying wherein the core is inserted into the tubular element which becomes an external liner,
- curing time for a few hours to permit realization of the required mechanical characteristics of adhesion.

2. System for the reconditioning of used lamination cylinders of claim 1, **characterised in that** it comprises a separation stage wherein the core is separated from the liner by raising the external surface temperature of the liner which expands and simultaneously the adhesion between core and liner becomes ineffective due to the adhesive losing effectiveness as a result of a rise in temperature.

3. System for the reconditioning of used lamination cylinders of claim 1, **characterised in that** the stage of mechanical turning of the internal surface of the tubular element produces a mechanical play of 0.10 to 0.20 mm relative to the external surface of the core in order to permit coupling.

4. System for the reconditioning of lamination cylinders of claim 1, **characterised in that** the turning stage prepares the external surface of the core and the internal surface of the tubular element such that the adhesive grips and adheres uniformly and homogenously.

5. System for the reconditioning of used lamination cylinders of claim 1, **characterised in that** the keying stage is not executed utilising heat, such that the resistance to wear of the external liner is not reduced.

6. System for the reconditioning of used lamination cylinders of claim 1, **characterised in that** it comprises a final stage of preparation of a profile involving the creation of grooves of a required geometry for lamination.
